(19) Europäisches Patentamt
European Patent Office
Office européen des brevets

(11) EP 3 345 775 B1

(12) EUROPEAN PATENT SPECIFICATION

(45) Date of publication and mention of the grant of the patent:
**07.08.2019 Bulletin 2019/32**

(21) Application number: **17206604.5**

(22) Date of filing: **12.12.2017**

(51) Int Cl.:
***B60C 1/00*** (2006.01)
***C08L 9/06*** (2006.01)
***C08K 5/548*** (2006.01)
***C08K 3/04*** (2006.01)
***C08K 3/36*** (2006.01)
***C08K 3/22*** (2006.01)
***C08L 25/16*** (2006.01)

(54) **RUBBER COMPOSITION FOR TREAD AND PNEUMATIC TIRE**

KAUTSCHUKZUSAMMENSETZUNG FÜR LAUFFLÄCHEN UND LUFTREIFEN

COMPOSITION DE CAOUTCHOUC POUR BANDE DE ROULEMENT ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2017 JP 2017000260**

(43) Date of publication of application:
**11.07.2018 Bulletin 2018/28**

(73) Proprietor: **Sumitomo Rubber Industries, Ltd.**
**Kobe-shi, Hyogo 651-0072 (JP)**

(72) Inventor: **YAMADA, Ayuko**
**Kobe-shi, Hyogo 651-0072 (JP)**

(74) Representative: **TBK**
**Bavariaring 4-6**
**80336 München (DE)**

(56) References cited:
**EP-A1- 2 944 669**
**EP-A1- 3 000 618**
**WO-A1-2016/104144**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

BACKGROUND OF THE INVENTION

Field of the Invention

The present invention relates to a rubber composition for a tread and a pneumatic tire.

Description of the Background Art

In recent years, a rubber material for tires is required to exhibit improved wet grip performance and the like according to safety being required for automobiles, and both wet grip performance and fuel economy which is in a trade-off relationship with the wet grip performance are required to be improved.

For example, a technique in which wet grip performance and the like are improved by a rubber composition that contains: an oil-extended butadiene rubber synthesized by using a rare earth catalyst; a predetermined styrene-butadiene rubber; an inorganic filler; and the like, is suggested in Japanese Laid-Open Patent Publication No. 2015-232114. However, enhanced improvement of both wet grip performance and fuel economy is required.

The present invention has been made in order to solve the aforementioned problem, and an object of the present invention is to provide a rubber composition, for a tread, which allows both wet grip performance and fuel economy to be improved in a well-balanced manner, and a pneumatic tire using the rubber composition.

SUMMARY OF THE INVENTION

The present invention is directed to a rubber composition for a tread, and the rubber composition includes: a rubber component that contains a styrene-butadiene rubber having 35 to 50% by mass of a bound styrene content, 25 to 45% by mass of a vinyl content, and a weight average molecular weight of 350000 to 700000; carbon black; silica; aluminium hydroxide and/or aluminium oxide: a silane coupling agent represented by a chemical formula (S1) indicated below; and a softener component containing an aromatic resin, in which a content of the styrene-butadiene rubber is not less than 60% by mass per 100% by mass of the rubber component, a content of the carbon black is 1 to 30 parts by mass per 100 parts by mass of the rubber component, a content of the silica is 45 to 75 parts by mass per 100 parts by mass of the rubber component, a total content of the aluminium hydroxide and the aluminium oxide is 1 to 40 parts by mass per 100 parts by mass of the rubber component, a content of the aromatic resin is 2 to 10 parts by mass per 100 parts by mass of the rubber component, and a content of the softener component is 20 to 40 parts by mass per 100 parts by mass of the rubber component.

[Chemical formula 1]

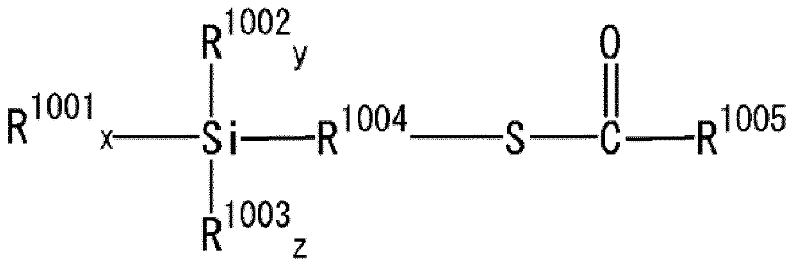

(S1)

In which $R^{1001}$ represents a monovalent group selected from -Cl, -Br, -$OR^{1006}$, -O(O=)$CR^{1006}$, - ON=$CR^{1006}R^{1007}$, -$NR^{1006}R^{1007}$, and -$(OSiR^{1006}R^{1007})_h(OSiR^{1006}R^{1007}R^{1008})$ ($R^{1006}$, $R^{1007}$, and $R^{1008}$ may be the same or different from each other, and each represent a hydrogen atom or a C1 - C18 monovalent hydrocarbon group, and an average of h is 1 to 4), $R^{1002}$ represents $R^{1001}$, a hydrogen atom, or a C1 - C18 monovalent hydrocarbon group, $R^{1003}$ represents $R^{1001}$, $R^{1002}$, a hydrogen atom, or -$[O(R^{1009}O)j]_{0.5}$-group ($R^{1009}$ represents a C1 - C18 alkylene group and j represents an integer of 1 to 4), $R^{1004}$ represents a C1 - C18 divalent hydrocarbon group, $R^{1005}$ represents a C1 - C18 monovalent hydrocarbon group, and x, y, and z are values that satisfy a relationship of $x+y+2z=3$, $0 \leq x \leq 3$, $0 \leq y \leq 2$, and $0 \leq z \leq 1$.

The present invention is directed to a pneumatic tire that includes a tread produced from the rubber composition.

The present invention is a rubber composition, for a tread, which includes: a predetermined amount of a rubber component that contains a styrene-butadiene rubber having a predetermined bound styrene content, a predetermined vinyl content, and a predetermined weight average molecular weight; and a predetermined amount of each of carbon black, silica, aluminium hydroxide and/or aluminium oxide, a predetermined silane coupling agent, and a softener component containing an aromatic resin. Therefore, wet grip performance and fuel economy can be improved in a well-balanced manner.

DESCRIPTION OF THE PREFERRED EMBODIMENTS

A rubber composition, for a tread, according to the present invention includes: a predetermined amount of a rubber component that contains a styrene-butadiene rubber having a predetermined bound styrene content, a predetermined vinyl content, and a predetermined weight average molecular weight; and a predetermined amount of each of carbon black, silica, aluminium hydroxide and/or aluminium oxide, a predetermined silane coupling agent, and a softener component containing an aromatic resin.

The action and effect, of the present invention, described below allow fuel economy to be improved while wet grip performance is maintained, and are assumed to allow balance between these performances to be significantly (synergistically) improved.

A predetermined styrene-butadiene rubber, of the present invention, which contains a predetermine styrene content and the like allows wet grip performance to be improved and, further, heat generation properties are improved by addition of a highly compatible aromatic resin. Meanwhile, there is a concern about deterioration of fuel economy which is in a trade-off relationship. However, an amount of silica in the rubber is reduced, dispersion of silica is improved and, further, the styrene-butadiene rubber, silica, aluminium hydroxide, and the like are firmly bound by the predetermined silane coupling agent of the present invention, whereby the heat generation is reduced and temperature dispersion peak becomes sharp. Thus, heat generation caused by addition of the aromatic resin can be caused to approach 0°C, and fuel economy is improved while wet grip performance is maintained. Therefore, in the present invention, predetermined styrene-butadiene rubber, silane coupling agent, aluminium hydroxide and/or aluminium oxide, and aromatic resin component according to the present invention, are used in combination, whereby balance between these performances is considered to be significantly (synergistically) improved.

Furthermore, the present invention allows not only achievement of both wet grip performance and good fuel economy but also achievement of good abrasion resistance.

In the present invention, as the rubber component, a styrene-butadiene rubber (hereinafter, also referred to as high styrene content SBR), in which a bound styrene content is 35 to 50% by mass, a vinyl content is 25 to 45% by mass, and a weight average molecular weight is 350000 to 700000, is used.

The high styrene content SBR can be prepared by using a publicly known method such as anionic polymerization, solution polymerization, and emulsion polymerization. For example, a monolithium initiator such as n-butyllithium and sec-butyllithium, or a polyfunctional polymerization initiator such as tetramethylene-1,4-dilithium, dilithiobenzene, dilithiomethane, 1,4-dilithio-2-ethylcyclohexane, and 1,3,5-trilithiobenzene is used in polymerization of styrene and butadiene, thereby producing a desired polymer. A commercially available product may be used.

The bound styrene content in the high styrene content SBR is not less than 35% by mass, preferably not less than 38% by mass, and more preferably not less than 40% by mass. When the bound styrene content is not less than the lower limit, the effect of the present invention tends to be sufficiently obtained. Meanwhile, the bound styrene content is not greater than 50% by mass, preferably not greater than 48% by mass, and more preferably not greater than 45% by mass. When the bound styrene content is not greater than the upper limit, excellent fuel economy tends to be obtained.

In the description herein, the bound styrene content in the SBR is calculated by $H^1$-NMR measurement.

The vinyl content in the high styrene content SBR is not less than 25% by mass, preferably not less than 28% by mass, and more preferably not less than 30% by mass. When the vinyl content is not less than the lower limit, the effect of the present invention tends to be sufficiently obtained. Meanwhile, the vinyl content is not greater than 45% by mass, preferably not greater than 43% by mass, and more preferably not greater than 40% by mass. When the vinyl content is not greater than the upper limit, excellent fuel economy tends to be obtained.

In the description herein, the vinyl content in the SBR represents a vinyl content in the butadiene moiety, and is calculated by $H^1$-NMR measurement.

The weight average molecular weight (Mw) of the high styrene content SBR is not less than 350000, preferably not less than 380000, and more preferably not less than 400000. When the weight average molecular weight (Mw) is not less than the lower limit, the effect of the present invention tends to be sufficiently exhibited. Meanwhile, the Mw is not greater than 700000, preferably not greater than 650000, and more preferably not greater than 600000.

In the description herein, the weight average molecular weight (Mw) can be obtained by conversion, based on polystyrene standard, of a value measured by gel permeation chromatography (GPC) (GPC-8000 series available from Tosoh Corporation, detector: differential refractometer, column: TSK GEL SUPERMULTIPORE HZ-M available from Tosoh Corporation).

A content (solid content) of the high styrene content SBR in 100% by mass of the rubber component is not less than 60% by mass, preferably 65 to 90% by mass, and more preferably 70 to 85% by mass. When the content is not less than the lower limit, wet grip performance tends to be improved.

Randomness of a styrene unit and a butadiene unit in the high styrene content SBR is not particularly limited. A random SBR or a gradient-structure SBR can be used according to the application. The high styrene content SBR may have any molecular weight distribution, and may be unimodal or multimodal. These characteristics can be selected as appropriate.

The high styrene content SBR may be modified with a polar group having an affinity for the filler. The polar group to be introduced is not particularly limited. Examples of the polar group include alkoxysilyl, amino, hydroxy, glycidyl, amide, carboxyl, ether, thiol, and cyano groups, and metal atoms such as tin or titanium. Alkoxysilyl and amino groups are preferable. The position of the polar group is not particularly limited and the polar group may be at the chain end or in the main chain or may form a graft structure branched from the main chain. Moreover, one polymer chain may contain a plurality of modified groups.

Furthermore, the high styrene content SBR may be oil-extended in view of improvement of processability.

As an SBR other than the high styrene content SBR, an SBR (hereinafter, also referred to as low styrene content SBR) having 5 to 34% by mass of a bound styrene content is preferably contained. The bound styrene content of the low styrene content SBR is preferably 5 to 30% by mass, and more preferably 10 to 20% by mass. When the bound styrene content is not less than the lower limit, good wet grip performance tends to be obtained. When the bound styrene content is not greater than the upper limit, good fuel economy tends to be obtained.

A vinyl content of the low styrene content SBR is preferably not less than 20% by mass, and more preferably not less than 30% by mass. When the vinyl content of the low styrene content SBR is not less than the lower limit, good wet grip performance tends to be obtained. Meanwhile, the vinyl content is preferably not greater than 40% by mass, and more preferably not greater than 35% by mass. When the vinyl content is not greater than the upper limit, excellent fuel economy tends to be obtained.

In a case where the low styrene content SBR is blended, a content of the low styrene content SBR in 100% by mass of the rubber component is preferably not less than 5% by mass, and more preferably not less than 10% by mass. Meanwhile, the content is preferably not greater than 30% by mass, and more preferably not greater than 20% by mass. When the content is within the above-described range, the effect of the present invention can be sufficiently exhibited.

As the SBR such as the high styrene content SBR and the low styrene content SBR, a product that is manufactured by and available from, for example, Sumitomo Chemical Company, Limited, JSR Corporation, Asahi Kasei Corporation, or Zeon Corporation, can be used.

Examples of the rubber component, other than the high styrene content SBR, which can be used include natural rubber (NR), epoxidized natural rubber (ENR), isoprene rubber (IR), butadiene rubber (BR), styrene-isoprene-butadiene rubber (SIBR), ethylenepropylene-diene rubber (EPDM), chloroprene rubber (CR), acrylonitrile-butadiene rubber (NBR), and butyl-based rubber. Among them, BR is preferable in view of the effect of the present invention.

The BR is not particularly limited, and BR which is generally used in the tire industry can be used. Examples of the BR include high cis-1,4-polybutadiene rubber (high cis BR), butadiene rubber (SPB-containing BR) containing 1,2-syndiotactic polybutadiene crystals, modified butadiene rubber (modified BR), and BR (rare earth BR) obtained by synthesis using a rare earth catalyst.

As the BR, a product available from, for example, Ube Industries, Ltd., JSR Corporation, Asahi Kasei Corporation, or Zeon Corporation, can be used.

In a case where the BR is contained, a content of the BR in 100% by mass of the rubber component is preferably not less than 3% by mass, and more preferably not less than 5% by mass. Meanwhile, the content of the BR is preferably not greater than 30% by mass, and more preferably not greater than 20% by mass. When the content of the BR is within the above-described range, the effect of the present invention tends to be advantageously obtained.

The rubber composition of the present invention contains carbon black. The carbon black is not particularly limited. Examples of the carbon black include N134, N110, N220, N234, N219, N339, N330, N326, N351, N550, and N762. Each of them maybe used alone, or two or more of them may be used in combination.

A nitrogen adsorption specific surface area ($N_2SA$) of the carbon black is preferably not less than 5 $m^2/g$, more preferably not less than 50 $m^2/g$, and even more preferably not less than 100 $m^2/g$. When the $N_2SA$ is not less than the lower limit, good wet grip performance tends to be obtained. Meanwhile, the $N_2SA$ is preferably not greater than 200 $m^2/g$, more preferably not greater than 150 $m^2/g$, and even more preferably not greater than 130 $m^2/g$. When the $N_2SA$ is not greater than the upper limit, the carbon black can be preferably dispersed and good wet grip performance and fuel economy tend to be obtained.

The nitrogen adsorption specific surface area of the carbon black is obtained in compliance with JIS K6217-2:2001.

As the carbon black, a product available from, for example, Asahi Carbon Co., Ltd., Cabot Japan K.K., Tokai Carbon Co., Ltd., Mitsubishi Chemical Corporation, Lion Corporation, NSCC Carbon Co., Ltd., or Columbia Carbon, can be used.

A content of the carbon black in 100 parts by mass of the rubber component is not less than one part by mass, and preferably not less than 3 parts by mass. When the content is not less than the lower limit, reinforcing properties

can be sufficiently obtained, and good abrasion resistance tends to be obtained. Meanwhile, the content of the carbon black is preferably not greater than 30 parts by mass, and more preferably not greater than 15 parts by mass. When the content is not greater than the upper limit, good rolling resistance tends to be obtained.

The rubber composition of the present invention contains silica. Examples of the silica include dry-process silicas (anhydrous silicas) and wet-process silicas (hydrous silicas). Among them, a wet-process silica is preferable because the wet-process silica contains a lot of silanol groups.

A nitrogen adsorption specific surface area ($N_2SA$) of the silica is preferably not less than 90 $m^2/g$, more preferably not less than 120 $m^2/g$, and even more preferably not less than 150 $m^2/g$. When the $N_2SA$ is not less than the lower limit, good wet grip performance is obtained. The $N_2SA$ is preferably not greater than 250 $m^2/g$, more preferably not greater than 200 $m^2/g$, and even more preferably not greater than 180 $m^2/g$. When the $N_2SA$ is not greater than the upper limit, good fuel economy is obtained.

The nitrogen adsorption specific surface area of the silica is a value measured in the BET method in compliance with ASTM D3037-81.

As the silica, a product available from, for example, Degussa, Rhodia, TOSOH SILICA CORPORATION, Solvay Japan, Ltd., or Tokuyama Corporation, can be used.

A content of the silica in 100 parts by mass of the rubber component is not less than 45 parts by mass, preferably not less than 50 parts by mass, and more preferably not less than 55 parts by mass. When the content is not less than the lower limit, the effect of the present invention is sufficiently obtained. Meanwhile, the content is not greater than 75 parts by mass, preferably not greater than 70 parts by mass, and more preferably not greater than 65 parts by mass. When the content is not greater than the upper limit, the silica is likely to be uniformly dispersed in the rubber composition, and good fuel economy and wet grip performance are obtained.

The rubber composition of the present invention contains a silane coupling agent represented by the following formula (S1).

[Chemical formula 2]

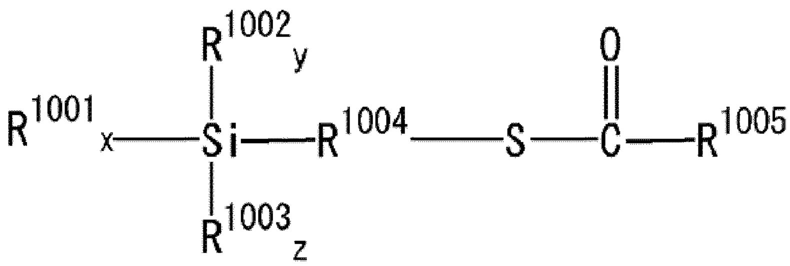

(S1)

[In the formula, $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ ($R^{1006}$, $R^{1007}$, and $R^{1008}$ may be the same or different from each other, and each represent a hydrogen atom or a C1 - C18 monovalent hydrocarbon group, and an average of h is 1 to 4), $R^{1002}$ represents $R^{1001}$, a hydrogen atom, or a C1 - C18 monovalent hydrocarbon group, $R^{1003}$ represents $R^{1001}$, $R^{1002}$, a hydrogen atom, or $-[O(R^{1009}O)j]_{0.5}$-group ($R^{1009}$ represents a C1 - C18 alkylene group and j represents an integer of 1 to 4), $R^{1004}$ represents a C1 - C18 divalent hydrocarbon group, $R^{1005}$ represents a C1 - C18 monovalent hydrocarbon group, and x, y, and z are values that satisfy the relationship of $x+y+2z=3$, $0\leq x\leq 3$, $0\leq y\leq 2$, and $0\leq z\leq 1$.]

In the formula (SI), preferably, $R^{1005}$, $R^{1006}$, $R^{1007}$, and $R^{1008}$ are each independently selected from the group consisting of linear, cyclic, or branched C1 - C18 alkyl group, alkenyl group, aryl group, and aralkyl group. Furthermore, in a case where $R^{1002}$ is a C1 - C18 monovalent hydrocarbon group, $R^{1002}$ is preferably selected from the group consisting of linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include a C1 - C18 alkylene group, a C2 - C18 alkenylene group, a C5 - C18 cycloalkylene group, a C6 - C18 cycloalkylalkylene group, a C6 - C18 arylene group, and a C7 - C18 aralkylene group. The alkylene group and the alkenylene group may be each linear or branched. The cycloalkylene group, the cycloalkylalkylene group, the arylene group, and the aralkylene group may have a functional group such as a lower alkyl group, on the ring. $R^{1004}$ is preferably a C1 - C6 alkylene group, and is particularly preferably a linear alkylene group such as a methylene group, an ethylene group, a trimethylene group, a tetramethylene group, a pentamethylene group, and a hexamethylene group.

In the formula (SI), specific examples of $R^{1002}$, $R^{1005}$, $R^{1006}$, $R^{1007}$, and $R^{1008}$ include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

In the formula (SI), examples of the linear alkylene group as $R^{1009}$ include a methylene group, an ethylene group, an n-propylene group, an n-butylene group, and a hexylene group, and examples of the branched alkylene group as $R^{1009}$ include an isopropylene group, an isobutylene group, and a 2-methylpropylene group.

Specific examples of the silane coupling agent represented by the formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among then, in view of achievement of both processability and good fuel economy, 3-octanoylthiopropyltriethoxysilane (NXT silane available from Momentive Performance Materials) is particularly preferable. Each of these silane coupling agents may be used alone, or two or more of them may be used in combination.

A content of the silane coupling agent, represented by the formula (S1), in the rubber composition of the present invention is preferably 1 to 15 part by mass and more preferably 3 to 10 parts by mass per 100 parts by mass of silica. When the content of the silane coupling agent is within the above-described range, the effect of the present invention is advantageously obtained.

A silane coupling agent other than the silane coupling agents represented by the formula (S1) may be further added when it does not inhibit the effect of the present invention.

As the silane coupling agent, a product available from, for example, Degussa, Momentive, Shin-Etsu Silicone, Tokyo Chemical Industry Co., Ltd., AZmax, or Dow Corning Toray Co., Ltd., can be used.

The rubber composition of the present invention contains aluminium hydroxide and/or aluminium oxide.

An average particle diameter of each of the aluminium hydroxide and aluminium oxide is preferably not greater than 10 μm, more preferably not greater than 5 μm, and even more preferably not greater than 3 μm. When the average particle diameter is not greater than the upper limit, good wet grip performance tends to be obtained. The average particle diameter is preferably not less than 0.05 μm, and more preferably not less than 0.1 μm. When the average particle diameter is not less than the lower limit, dispersion is good, and excellent wet grip performance tends to be obtained.

The average particle diameter of each of the aluminium hydroxide and aluminium oxide is measured by a transmission type electron microscope or a scanning type electron microscope. The average particle diameter represents the major axis, and the major axis represents the longest length obtained when powder of aluminium hydroxide or powder of aluminium oxide is projected on a projection plane while a direction of the powder of aluminium hydroxide or the powder of aluminium oxide on the projection plane is variously changed.

A total content of aluminium hydroxide and aluminium oxide in 100 parts by mass of the rubber component is not less than one part by mass, preferably not less than 5 parts by mass, and more preferably not less than 7 parts by mass. The total content is not greater than 40 parts by mass, preferably not greater than 30 parts by mass, and more preferably not greater than 20 parts by mass. When the total content is within the above-described range, the effect of the present invention is advantageously obtained.

A total content of the carbon black, the silica, aluminium hydroxide, and aluminium oxide in 100 parts by mass of the rubber component is preferably 20 to 150 parts by mass, more preferably 40 to 120 parts by mass, and even more preferably 60 to 100 parts by mass in view of the effect of the present invention being advantageously obtained.

The rubber composition of the present invention contains a softener component that includes an aromatic resin. In the present invention, the softener component represents an acetone-soluble component. Specific examples of the softener component include oils such as process oils and vegetable fats and oils, liquid diene polymers, coumarone-indene resins, and terpene resins as well as aromatic resins.

The aromatic resin is a polymer that contains an aromatic compound as a component. The aromatic compound is not particularly limited when the aromatic compound is a compound having an aromatic ring. Examples of the aromatic compound include phenolic compounds such as phenol, alkylphenols, alkoxyphenols, and unsaturated hydrocarbon group-containing phenols, naphthol compounds such as naphthol, alkylnaphthols, alkoxynaphthols, and unsaturated hydrocarbon group-containing naphthols, styrene and styrene derivatives such as alkylstyrenes, alkoxystyrenes, and unsaturated hydrocarbon group-containing styrenes, coumarone, and indene.

Examples of the aromatic resin include an α-methylstyrene-based resin and an aromatic modified terpene resin. Examples of the α-methylstyrene-based resin include α-methylstyrene homopolymer and a copolymer of α-methylstyrene and styrene. Examples of the aromatic modified terpene resin include a resin obtained by modifying a terpene resin with the above-described aromatic compound, and a resin obtained by hydrogenating the resin.

A content of the aromatic resin in 100 parts by mass of the rubber component is not less than 2 parts by mass, and preferably not less than 4 parts by mass. Meanwhile, the content is not greater than 10 parts by mass, and preferably not greater than 7 parts by mass. When the content is within the above-described range, the effect of the present invention tends to be more advantageously obtained.

Examples of the oil include process oils, vegetable fats and oils, and mixtures thereof. Examples of the process oil include paraffinic process oils, aromatic process oils, and naphthenic process oils. Examples of the vegetable fats and oils include castor oil, cottonseed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. Each of them may be used alone, or two or more of them may be used in combination. Among them, the process oil is preferable because the effect of the present invention is advantageously obtained.

The liquid diene polymer is not particularly limited when the liquid diene polymer is a diene polymer having a weight average molecular weight of not greater than 50000. Examples of the liquid diene polymer include styrene-butadiene copolymers (rubber), butadiene polymers (rubber), isoprene polymers (rubber), and acrylonitrile-butadiene copolymers (rubber). Among them, liquid styrene-butadiene copolymers (liquid SBR) and liquid butadiene polymers (liquid BR) are preferable.

A weight average molecular weight (Mw) of the liquid diene polymer is preferably not less than 1000, and more preferably not less than 1500. When the Mw is less than 1000, abrasion resistance tends to be reduced. Meanwhile, the Mw is preferably not greater than 50000, more preferably not greater than 20000, and even more preferably not greater than 15000. When the Mw is greater than 50000, performance on snow and ice, particularly initial performance on snow and ice, tends to be degraded. Furthermore, a difference between the Mw and the molecular weight of the rubber component is reduced, and an effect as a softener is less likely to be exhibited.

The coumarone-indene resin is a resin that contains coumarone and indene as a monomer component that forms a skeleton (main chain) of the resin. Examples of the monomer component, other than coumarone and indene, contained in the skeleton include styrene, $\alpha$-methylstyrene, methyl indene, and vinyl toluene.

Examples of the terpene resin include polyterpene resins and terpene phenol resins. Examples of the polyterpene resins include terpene resins such as $\alpha$-pinene resin, $\beta$-pinene resin, limonene resin, dipentene resin, and $\beta$-pinene-limonene resin, and hydrogenated terpene resins obtained by hydrogenating the terpene resins. Examples of the terpene phenol resin include resins obtained by copolymerization of terpene compounds and phenolic compounds, and resins obtained by hydrogenating the resins.

A content of the softener component in 100 parts by mass of the rubber component is not less than 20 parts by mass, and preferably not less than 25 parts by mass. Meanwhile, the content is not greater than 40 parts by mass, and preferably not greater than 38 pars by mass. When the content is within the above-described range, the effect of the present invention tends to be more advantageously obtained.

As the softener component, a product available from, for example, Maruzen Petrochemical Co., Ltd., Sumitomo Bakelite Co., Ltd., YASUHARA CHEMICAL CO., LTD., Tosoh Corporation, Rutgers Chemicals, BASF, Arizona Chemical Company, NITTO CHEMICAL CO., LTD., NIPPON SHOKUBAI CO., LTD., JX Energy, ARAKAWA CHEMICAL INDUSTRIES, LTD., TAOKA CHEMICAL COMPANY, LIMITED; Idemitsu Kosan Co., Ltd., SANKYO YUKA KOGYO K.K., Japan Energy Corporation, Olisoy, H&R, Hokoku Corporation, SHOWA SHELL SEKIYU K. K., or FUJI KOSAN COMPANY, LTD., can be used.

The rubber composition preferably contains wax. The wax is not particularly limited. Examples of the wax include petroleum wax such as paraffin wax and microcrystalline wax, natural wax such as plant wax and animal wax, and synthetic wax such as polymers of ethylene, propylene, etc. Each of them may be used alone, or two or more of them may be used in combination. Among them, petroleum wax is preferable, and paraffin was is more preferable because the effect of the present invention is more advantageously obtained.

As the wax, a product available from, for example, Ouchi Shinko Chemical Industrial Co., Ltd., NIPPON SEIRO CO., LTD., or Seiko Chemical Co., Ltd., can be used.

In the rubber composition, a content of the wax in 100 parts by mass of the rubber component is preferably not less than 1.0 part by mass, and more preferably not less than 1.5 parts by mass. Meanwhile, the content is preferably not greater than 10 parts by mass, and more preferably not greater than 7 parts by mass. When the content is within the above-described range, the effect of the present invention tends to be advantageously obtained.

The rubber composition preferably contains an antioxidant. Examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Each of them may be used alone, or two or more of them may be used in combination. Among them, the p-phenylenediamine antioxidants and the quinoline-based antioxidants are preferable, and N-(1,3-dimethylbutyl)-N'-phenyl-p-phenylenediamine, and a polymer of 2,2,4-trimethyl-1,2-dihydroquinoline are more preferable.

As the antioxidant, a product available from, for example, Seiko Chemical Co., Ltd., Sumitomo Chemical Company, Limited, Ouchi Shinko Chemical Industrial Co., Ltd., or Flexsys, can be used.

In the rubber composition, a content of the antioxidant in 100 parts by mass of the rubber component is preferably not less than one part by mass, and more preferably not less than 3 parts by mass. Meanwhile, the content is preferably not greater than 10 parts by mass, and more preferably not greater than 7 parts by mass. When the content is within the above-described range, the effect of the present invention tends to be advantageously obtained.

The rubber composition preferably contains stearic acid. As stearic acid, a conventionally known one can be used. A product available from, for example, Nichiyu, NOF, Kao Corporation, Wako Pure Chemical Industries, Ltd., or Chiba Fatty Acid Co., Ltd., can be used.

In the rubber composition, a content of stearic acid in 100 parts by mass of the rubber component is preferably not less than 0.5 parts by mass, and more preferably not less than one part by mass. Meanwhile, the content is preferably not greater than 10 parts by mass, and more preferably not greater than 5 parts by mass. When the content is within the above-described range, the effect of the present invention tends to be advantageously obtained.

The rubber composition preferably contains zinc oxide. As zinc oxide, a conventionally known one can be used. A product available from, for example, Mitsui Mining & Smelting Co., Ltd., Toho Zinc Co., Ltd., HakusuiTech Co., Ltd., SEIDO CHEMICAL INDUSTRY CO., LTD., or Sakai Chemical Industry Co., Ltd., can be used.

In the rubber composition, a content of zinc oxide in 100 parts by mass of the rubber component is preferably not less than 0.5 parts by mass, and more preferably not less than one part by mass. Meanwhile, the content is preferably not greater than 10 parts by mass, and more preferably not greater than 5 parts by mass. When the content is within the above-described range, the effect of the present invention tends to be more advantageously obtained.

The rubber composition preferably contains sulfur. Examples of sulfur include those generally used in the rubber industry, such as powdery sulfur, precipitated sulfur, colloidal sulfur, insoluble sulfur, highly dispersible sulfur, and soluble sulfur. Each of them may be used alone, or two or more of them may be used in combination.

As the sulfur, a product available from, for example, Tsurumi Chemical Industry Co., Ltd., Karuizawa Sulfur Co, Ltd., SHIKOKU CHEMICALS CORPORATION, Flexsys, Nippon Kanryu Industry Co., Ltd., or Hosoi Chemical Industry Co., Ltd., can be used.

In the rubber composition, a content of the sulfur in 100 parts by mass of the rubber component is preferably not less than 0.5 parts by mass, and more preferably not less than 0.8 parts by mass. Meanwhile, the content is preferably not greater than 10 parts by mass, more preferably not greater than 5 parts by mass, and even more preferably not greater than 3 parts by mass. When the content is within the above-described range, the effect of the present invention tends to be advantageously obtained.

The rubber composition preferably contain a vulcanization accelerator. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. Each of them may be used alone, or two or more of them may be used in combination. Among them, the sulfenamide-based vulcanization accelerator and the guanidine-based vulcanization accelerator are preferable because the effect of the present invention is more advantageously obtained.

In the rubber composition, a content of the vulcanization accelerator in 100 parts by mass of the rubber component is preferably not less than one part by mass, and more preferably not less than 3 parts by mass. Meanwhile, the content is preferably not greater than 10 parts by mass, and more preferably not greater than 7 parts by mass. When the content is within the above-described range, the effect of the present invention tends to be advantageously obtained.

In addition to the above-described components, an additive which is generally used in the tire industry can be blended in the rubber composition. Examples of the additive include: organic peroxides; fillers such as calcium carbonate, talc, alumina, clay, aluminium hydroxide, and mica; and processing aids such as plasticizers and lubricants.

The rubber composition, for a tread, according to the present invention can be manufactured by, for example, a method for: kneading each component using a rubber kneading apparatus such as an open roll or a Banbury mixer; and then conducting vulcanization.

The pneumatic tire according to the present invention is manufactured by a general method using the rubber composition for a tread. That is, the rubber composition having the above-described components blended therein is extruded so as to fit into a shape of the tread in an unvulcanized state, and both the rubber composition and the other tire components are formed on a tire forming machine in a general method into an unvulcanized tire. The unvulcanized tire is heated and pressurized in a vulcanizer, to obtain a tire.

The pneumatic tire of the present invention can be preferably used as tires for passenger cars, tires for large passenger cars and large SUVs, heavy-duty tires for trucks and buses, and tires for light trucks.

[Examples]

Hereinafter, various chemicals used in examples and comparative examples are collectively described.

SBR1 (high styrene content SBR): the bound styrene content was 40% by mass, the vinyl content was 30% by mass, and the Mw was 500000.
SBR1-1 (high styrene content SBR): the bound styrene content was 45% by mass, the vinyl content was 35% by mass, and the Mw was 600000.
SBR2 (low styrene content SBR): the bound styrene content was 10% by mass, the vinyl content was 40% by mass, and the Mw was 200000.
SBR2-1 (low styrene content SBR): the bound styrene content was 15% by mass, the vinyl content was 35% by mass, and the Mw was 200000.

BR: the cis content was 97% by mass.
silica: the $N_2SA$ was 175 $m^2/g$.
silane coupling agent 1: 3-octanoylthiopropyltriethoxysilane
silane coupling agent 2: bis(3-triethoxysilylpropyl)tetrasulfide
aluminium hydroxide: the average primary particle diameter was 1 μm
carbon black: the $N_2SA$ was 114 $m^2/g$
oil (plasticizer): NC300 (oil) available from Japan Energy Corporation

resin 1: α-methylstyrene-based resin (copolymer of α-methylstyrene and styrene, softening point: 85°C, Tg: 43°C)

resin 2: YS resin TO125 (softening point: 125°C, aromatic modified terpene resin) available from YASUHARA CHEMICAL CO., LTD.

antioxidant 1: ANTIGENE (registered trademark) 6C (N-phenyl-N'-(1,3-dimethylbutyl)-p-phenylenediamine) available from Sumitomo Chemical Company, Limited
antioxidant 2: NOCRAC (registered trademark) 224 (poly(2,2,4-trimethyl-1,2-dihydroquinoline)) available from Ouchi Shinko Chemical Industrial Co., Ltd.

stearic acid: stearic acid "Tsubaki" available from NOF CORPORATION
zinc oxide: Ginrei R, available from Toho Zinc Co., Ltd.
wax: OZOACE (registered trademark) 0355 available from NIPPON SEIRO CO., LTD.
5% oil-containing powdery sulfur: HK-200-5 (vulcanizing agent, oil component: 5% by mass) available from Hosoi Chemical Industry Co., Ltd.
vulcanization accelerator NS: N-tert-butyl-2-benzothiazolyl sulfenamide
vulcanization accelerator DPG: diphenylguanidine

(Production example 1 Synthesis of SBR1 (high styrene content SBR))

A stainless-steel polymerization reactor having an inner volume of 20 liters was washed and dried, and gas thereinside was replaced with dry nitrogen, and hexane (specific gravity: 0.68 $g/cm^3$), 1,3-butadiene, styrene, tetrahydrofuran, ethylene glycol diethyl ether were introduced into the polymerization reactor. Next, cyclohexane solution of bis(diethylamino)methylvinylsilane and n-hexane solution of n-butyllithium were introduced, to initiate polymerization.
The agitating speed was set to 130 rpm and the temperature in the polymerization reactor was set to 65°C, and, while the monomer was supplied continuously into the polymerization reactor, copolymerization of 1,3-butadiene and styrene was performed for three hours.
Next, the obtained polymer solution was agitated at the agitating speed of 130 rpm, and N-(3-dimethylaminopropyl)acrylamide was added, and the solution was agitated for 15 minutes. A hexane solution containing methanol was added to the polymer solution, and the polymer solution was further agitated for five minutes.
To the polymer solution, 2-tert-butyl-6-(3-tert-butyl-2-hydroxy-5-methylbenzyl)-4-methylphenyl acrylate, and pentaerythrityl tetrakis (3-laurylthiopropionate) were added, and, next, SBR1 was collected from the polymer solution by steam stripping.

(Production example 1-1 Synthesis of SBR1-1 (high styrene content SBR))

Cyclohexane, tetrahydrofuran, styrene, and 1,3-butadiene were fed into a nitrogen-purged autoclave reactor. The temperature of the contents in the reactor was adjusted to 20°C. Thereafter, n-butyllithium was added thereto, to initiate polymerization. The polymerization was performed in a thermally insulated state, and the maximum temperature reached 85°C. When a polymerization conversion rate reached 99%, butadiene was added, and polymerization was further performed for five minutes. Thereafter, methyltrimethoxysilane was added as a modifier, and reaction was performed for 15 minutes. After the polymerization was ended, 2,6-di-tert-butyl-p-cresol was added. Next, a solvent was removed by steam stripping, and drying by a heat roll adjusted to the temperature of 110°C was performed, to obtain SBR1-1.

(Production example 2 Synthesis of SBR2 (low styrene content SBR))

Hexane,1,3-butadiene, styrene, tetrahydrofuran, and ethylene glycol diethyl ether were introduced into a nitrogen-purged autoclave reactor. Next, cyclohexane solution of bis(diethylamino)methylvinylsilane and n-hexane solution of n-butyllithium were introduced, to initiate polymerization.

The agitating speed was set to 130 rpm, and the temperature in the reactor was set to 65°C, and, while the monomer was supplied continuously into the reactor, copolymerization of 1,3-butadiene and styrene was performed for three hours. Next, the obtained polymer solution was agitated at the agitating speed of 130 rpm, and N-(3-dimethylaminopropyl)acrylamide was added and reaction was performed for 15 minutes. After the polymerization was ended, 2,6-di-tert-butyl-p-cresol was added. Next, a solvent was removed by steam stripping, and drying by a heat roll adjusted to the temperature of 110°C was performed, to obtain SBR2.

(Production example 2-1 Synthesis of SBR2-1 (low styrene content SBR))

Cyclohexane, tetrahydrofuran, styrene, and 1,3-butadiene were fed into a nitrogen-purged autoclave reactor. The temperature of the contents in the reactor was adjusted to 20°C. Thereafter, n-butyllithium was added to initiate polymerization. The polymerization was performed in a thermally insulated state, and the maximum temperature reached 85°C. When a polymerization conversion rate reached 99%, butadiene was added, and polymerization was further performed for five minutes. Thereafter, 3-diethylaminopropyltrimethoxysilane was added as a modifier, and the reaction was performed for 15 minutes. After the polymerization was ended, 2,6-di-tert-butyl-p-cresol was added. Next, a solvent was removed by steam stripping, and drying by a heat roll adjusted to the temperature of 110°C was performed, to obtain SBR2-1.

<Examples and Comparative examples>

The chemicals other than sulfur and the vulcanization accelerator were kneaded by a Banbury mixer at 150°C for five minutes, according to the blended contents indicated in Tables 1 and 2. Sulfur and the vulcanization accelerator were added to the obtained kneaded product, and the obtained product was kneaded by using an open roll at 80°C for 12 minutes, to obtain an unvulcanized rubber composition.

The obtained unvulcanized rubber composition was formed into a shape of a tread, and the unvulcanized rubber composition and other tire components were adhered to each other on a tire forming machine, and pressed and vulcanized at 170°C for 20 minutes, to obtain a test tire (tire size: 11×7.10-5).

The following evaluation was made for the obtained test tires. In Table 1, comparative example 5 is used as a reference comparative example. In Table 2, comparative example 2-5 is used as a reference comparative example.

(Rolling resistance)

A sample was taken from the tread of each test tire. For the sample, a loss tangent (tanδ) was measured at 60°C by using a viscoelasticity spectrometer available from Ueshima Seisakusho Co., Ltd. under the conditions that an initial strain was 10%, a dynamic strain was 2%, and a frequency was 10 Hz. The rolling resistance was indicated as an index calculated by the following equation with an index of the tanδ of the reference comparative example being 100. The greater the index is, the more excellent fuel economy is. In a case where the index is not less than 85, practically advantageous fuel economy is obtained.

$$(\text{Rolling resistance index})=(\tan\delta \text{ of reference comparative example})/(\tan\delta \text{ of each blended content})\times 100$$

(Wet grip performance)

For the sample taken from the tread of each test tire, a viscoelastic parameter was measured in a torsional mode by using a viscoelastometer (ARES) available from Rheometric Scientific, Inc. The tanδ was measured at 0°C at a frequency of 10 Hz and a strain of 1%. The wet grip performance was indicated as an index calculated by using the following equation with the tanδ of reference comparative example being 100. The greater the index is, the more excellent wet grip performance is.

$$(\text{Wet grip index})=(\tan\delta \text{ of reference comparative example})/(\tan\delta \text{ of each blended content})\times 100$$

(Abrasion resistance)

For the sample taken from the tread of each test tire, an amount of abrasion was measured by using a Lambourn abrasion testing machine at room temperature under a load of 1.0 kgf at a slip rate of 30%, and was indicated as an index calculated by using the following equation. The greater the index is, the more excellent abrasion resistance is.

$$(\text{Abrasion resistance index})=(\text{amount of abrasion of reference comparative example})/(\text{amount of abrasion of each blended content})\times 100$$

[Table 1]

| | | Example | | | | | | | | | Comparative example | | | | |
|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 |
| Blended content (parts by mass) | SBR1 (high styrene content SBR) | 75 | 70 | 80 | 80 | 70 | 75 | 75 | | 75 | 80 | 70 | 80 | 60 | |
| | SBR1-1 (high styrene content SBR) | | | | | | | | 75 | | | | | | |
| | SBR2 (low styrene content SBR) | 10 | 15 | 10 | 10 | 15 | 10 | 10 | 10 | 10 | 10 | 15 | 10 | 15 | 10 |
| | SBR2-1 (low styrene content SBR) | | | | | | | | | | | | | | 75 |
| | BR | 15 | 15 | 10 | 10 | 15 | 15 | 15 | 15 | 15 | 10 | 15 | 10 | 25 | 15 |
| | Silica | 60 | 60 | 60 | 60 | 60 | 50 | 60 | 60 | 60 | 60 | 60 | 90 | 60 | 60 |
| | Silane coupling agent 1 | 4.8 | 4.8 | 4.8 | 4.8 | 4.8 | 4.8 | 4.8 | 4.8 | 4.8 | 4.8 | 4.8 | 7.2 | 4.8 | 4.8 |
| | Silane coupling agent 2 | | | | | | | | | | | | | | |
| | Aluminium hydroxide | 10 | 10 | 10 | 10 | 20 | 10 | 10 | 10 | 10 | | | | | 10 |
| | Carbon black | 5 | 5 | 5 | 1 | 5 | 10 | 5 | 5 | 5 | 5 | 5 | 5 | 5 | 5 |
| | Oil (plasticizer) | 30 | 30 | 30 | 30 | 30 | 30 | 30 | 30 | 30 | 30 | 30 | 30 | 25 | 30 |
| | Resin 1 | 5 | 5 | 5 | 5 | 5 | 5 | 7 | 5 | | 5 | 5 | 5 | 10 | 5 |
| | Resin 2 | | | | | | | | | | | | | | |
| | Antioxidant 1 | 2 | 2 | 2 | 2 | 2 | 2 | 2 | 2 | 2 | 2 | 2 | 2 | 2 | 2 |
| | Antioxidant 2 | 1 | 1 | 1 | 1 | 1 | 1 | 1 | 1 | 1 | 1 | 1 | 1 | 1 | 1 |
| | Stearic acid | 3 | 3 | 3 | 3 | 3 | 3 | 3 | 3 | 3 | 3 | 3 | 3 | 3 | 3 |
| | Zinc oxide | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 |
| | Sulfur (5% oil-containing sulfur) | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator NS | 2 | 2 | 2 | 2 | 2 | 2 | 2 | 2 | 2 | 2 | 2 | 2 | 2 | 2 |
| | Vulcanization accelerator DPG | 2 | 2 | 2 | 2 | 2 | 2 | 2 | 2 | 2 | 2 | 2 | 2 | 2 | 2 |

(continued)

| | | Example | | | | | | | | | Comparative example | | | | |
|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 |
| Performance of tire | Rolling resistance index | 95 | 100 | 86 | 92 | 98 | 90 | 94 | 90 | 97 | 85 | 90 | 65 | 92 | 100 |
| | Wet grip performance | 125 | 115 | 115 | 110 | 130 | 115 | 130 | 115 | 125 | 105 | 95 | 115 | 85 | 100 |
| | Abrasion resistance | 105 | 120 | 105 | 110 | 115 | 110 | 114 | 105 | 105 | 105 | 110 | 102 | 115 | 100 |

[Table 2]

| | | Example | Comparative example | | | | |
|---|---|---|---|---|---|---|---|
| | | 2 | 2-1 | 2-2 | 2-3 | 2-4 | 2-5 |
| Blended content (parts by mass) | SBR1 (high styrene content SBR) | 70 | 70 | | | | |
| | SBR1-1 (another high styrene content SBR) | | | | | | |
| | SBR2 (low styrene content SBR) | 15 | 15 | 85 | 85 | 85 | 85 |
| | SBR2-1 (another low styrene content SBR) | | | | | | |
| | BR | 15 | 15 | 15 | 15 | 15 | 15 |
| | Silica | 60 | 60 | 60 | 60 | 60 | 60 |
| | Silane coupling agent 1 | 4.8 | | 4.8 | | | |
| | Silane coupling agent 2 | | 4.8 | | 4.8 | 4.8 | 4.8 |
| | Aluminium hydroxide | 10 | | | 10 | | |
| | Carbon black | 5 | 5 | 5 | 5 | 5 | 5 |
| | Oil (plasticizer) | 30 | 35 | 35 | 35 | 30 | 35 |
| | Resin 1 | 5 | | | | 5 | |
| | Resin 2 | | | | | | |
| | Antioxidant 1 | 2 | 2 | 2 | 2 | 2 | 2 |
| | Antioxidant 2 | 1 | 1 | 1 | 1 | 1 | 1 |
| | Stearic acid | 3 | 3 | 3 | 3 | 3 | 3 |
| | Zinc oxide | 2 | 2 | 2 | 2 | 2 | 2 |
| | Wax | 2 | 2 | 2 | 2 | 2 | 2 |
| | Sulfur (5% oil-containing sulfur) | 1.5 | 1.5 | 1.5 | 1.5 | 1.5 | 1.5 |
| | Vulcanization accelerator NS | 2 | 2 | 2 | 2 | 2 | 2 |
| | Vulcanization accelerator DPG | 2 | 2 | 2 | 2 | 2 | 2 |
| Performance of tire | Rolling resistance index | 115 | 102 | 102 | 100 | 100 | 100 |
| | Wet grip performance | 110 | 103 | 100 | 102 | 102 | 100 |
| | Abrasion resistance | 115 | 103 | 105 | 100 | 100 | 100 |

According to Table 1, in examples each of which included: the high styrene content SBR containing predetermined bound styrene content, vinyl content, and weight average molecular weight; aluminium hydroxide and/or aluminium oxide; a specific silane coupling agent; and an aromatic resin, and had the carbon black and silica blended therein, performance balance between wet grip performance and fuel economy was significantly improved. Furthermore, abrasion resistance was also significantly improved.

Table 2 clearly indicates that, when the high styrene content SBR containing predetermined bound styrene content, vinyl content, and weight average molecular weight, aluminium hydroxide and/or aluminium oxide, a specific silane coupling agent, and an aromatic resin were used in combination, the performance balance was improved and, further, performance balance among abrasion resistance, and the above-described performances was synergistically improved.

Provided are a rubber composition, for a tread, which allows both wet grip performance and fuel economy to be improved in a well-balance manner, and a pneumatic tire using the rubber composition.

Provided is a rubber composition, for a tread, which includes: a predetermined amount of a rubber component that contains a styrene-butadiene rubber having a predetermined bound styrene content, a predetermined vinyl content,

and a predetermined weight average molecular weight; and a predetermined amount of each of carbon black, silica, aluminium hydroxide and/or aluminium oxide, a predetermined silane coupling agent, and a softener component containing an aromatic resin.

## Claims

**1.** A rubber composition for a tread, the rubber composition comprising:

a rubber component that contains a styrene-butadiene rubber having 35 to 50% by mass of a bound styrene content, 25 to 45% by mass of a vinyl content, and a weight average molecular weight of 350000 to 700000;
carbon black;
silica;
aluminium hydroxide and/or aluminium oxide:

a silane coupling agent represented by a chemical formula (S1) indicated below; and
a softener component containing an aromatic resin, wherein
a content of the styrene-butadiene rubber is not less than 60% by mass per 100% by mass of the rubber component,
a content of the carbon black is 1 to 30 parts by mass per 100 parts by mass of the rubber component,
a content of the silica is 45 to 75 parts by mass per 100 parts by mass of the rubber component,
a total content of the aluminium hydroxide and the aluminium oxide is 1 to 40 parts by mass per 100 parts by mass of the rubber component,
a content of the aromatic resin is 2 to 10 parts by mass per 100 parts by mass of the rubber component, and
a content of the softener component is 20 to 40 parts by mass per 100 parts by mass of the rubber component.

[Chemical formula 1]

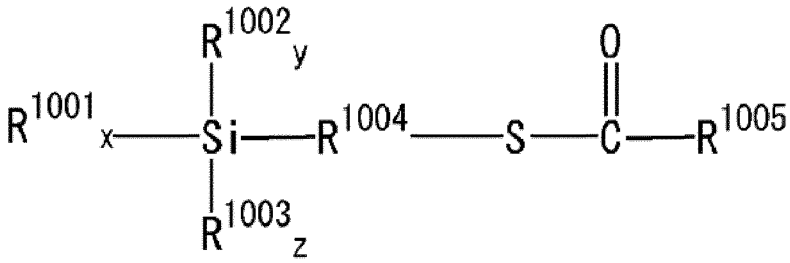

( S1 )

where $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ ($R^{1006}$, $R^{1007}$, and $R^{1008}$ are the same or different from each other, and each represent a hydrogen atom or a C1 - C18 monovalent hydrocarbon group, and an average of h is 1 to 4), $R^{1002}$ represents $R^{1001}$, a hydrogen atom, or a C1 - C18 monovalent hydrocarbon group, $R^{1003}$ represents $R^{1001}$, $R^{1002}$, a hydrogen atom, or $-[O(R^{1009}O)j]_{0.5}$-group ($R^{1009}$ represents a C1 - C18 alkylene group and j represents an integer of 1 to 4), $R^{1004}$ represents a C1 - C18 divalent hydrocarbon group, $R^{1005}$ represents a C1 - C18 monovalent hydrocarbon group, and x, y, and z are values that satisfy a relationship of $x+y+2z=3$, $0 \leq x \leq 3$, $0 \leq y \leq 2$, and $0 \leq z \leq 1$.

**2.** A pneumatic tire comprising a tread produced from the rubber composition according to claim 1.

## Patentansprüche

**1.** Kautschukzusammensetzung für eine Lauffläche, wobei die Kautschukzusammensetzung umfasst:

eine Kautschukkomponente, die einen Styrol-Butadien-Kautschuk enthält, der 35 bis 50 Massen-% eines gebundenen Styrolgehalts, 25 bis 45 Massen-% eines Vinylgehalts und ein gewichtsgemitteltes Molekulargewicht von 350000 bis 700000 aufweist;
Carbon Black;
Siliciumdioxid;

Aluminiumhydroxid und/oder Aluminiumoxid:

ein Silan-Haftvermittler, der durch eine unten angegebene chemische Formel (S1) dargestellt ist; und
eine Weichmacherkomponente, die ein aromatisches Harz enthält, wobei
ein Gehalt des Styrol-Butadien-Kautschuks von nicht weniger als 60 Massen-% pro 100 Massen-% der Kautschukkomponente beträgt,
ein Gehalt des Carbon Black 1 bis 30 Massenteile pro 100 Massenteile der Kautschukkomponente beträgt,
ein Gehalt des Siliciumdioxids 45 bis 75 Massenteile pro 100 Massenteile der Kautschukkomponente beträgt,
ein Gesamtgehalt des Aluminiumhydroxids und des Aluminiumoxids 1 bis 40 Massenteile pro 100 Massenteile der Kautschukkomponente beträgt,
ein Gehalt des aromatischen Harzes 2 bis 10 Massenteile pro 100 Massenteile der Kautschukkomponente beträgt, und
ein Gehalt der Weichmacherkomponente 20 bis 40 Massenteile pro 100 Massenteile der Kautschukkomponente beträgt.

[Chemische Formel 1]

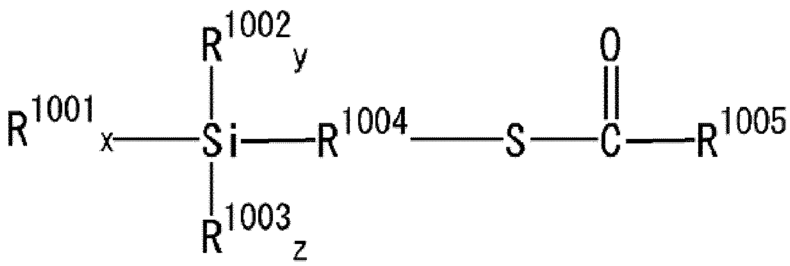

(S1)

wobei $R^{1001}$ eine einwertige Gruppe ausgewählt aus -Cl, -Br, -$OR^{1006}$, -O(O=)$CR^{1006}$, -ON=$CR^{1006}R^{1007}$, -$NR^{1006}R^{1007}$ und -$(OSiR^{1006}R^{1007})_h(OSiR^{1006}R^{1007}R^{1008})$ darstellt ($R^{1006}$, $R^{1007}$ und $R^{1008}$ sind gleich oder verschieden voneinander, und stellen jeweils ein Wasserstoffatom oder eine einwertige Cl-C18-Kohlenwasserstoffgruppe dar und ein Durchschnitt von h ist 1 bis 4), $R^{1002}$ $R^{1001}$, ein Wasserstoffatom oder eine einwertige Cl-C18-Kohlenwasserstoffgruppe darstellt, $R^{1003}$ $R^{1001}$, $R^{1002}$, ein Wasserstoffatom oder -$[O(R^{1009}O)j]_{0.5}$-Gruppe darstellt ($R^{1009}$ stellt eine C1-C18-Alkylengruppe dar und j stellt eine ganze Zahl von 1 bis 4 dar), $R^{1004}$ stellt eine zweiwertige C1-C18 Kohlenwasserstoffgruppe dar, $R^{1005}$ stellt eine einwertige C1-C18 Kohlenwasserstoffgruppe dar, und x, y und z sind Werte, die einen Zusammenhang von $x+y+2z=3$, $0 \le x \le 3$, $0 \le y \le 2$ und $0 \le z \le 1$ erfüllen.

**2.** Luftreifen, der eine Lauffläche umfasst, die aus der Kautschukzusammensetzung nach Anspruch 1 hergestellt ist.

**Revendications**

**1.** Composition de caoutchouc pour une bande de roulement, la composition de caoutchouc comprenant :

un composant caoutchouc qui contient un caoutchouc de styrène-butadiène ayant une teneur en styrène lié de 35 à 50 % en masse, une teneur en vinyle de 25 à 45 % en masse, et une masse moléculaire moyenne en masse de 350 000 à 700 000 ;
du noir de carbone ;
de la silice ;
de l’hydroxyde d’aluminium et/ou de l’oxyde d’aluminium ;
un agent de couplage de type silane représenté par la formule chimique (S1) indiquée ci-dessous ; et
un composant plastifiant contenant une résine aromatique, dans laquelle
la teneur en le caoutchouc de styrène-butadiène n’est pas inférieure à 60 % en masse pour 100 % en masse du composant caoutchouc,
la teneur en le noir de carbone est de 1 à 30 parties en masse pour 100 parties en masse du composant

caoutchouc,
la teneur en la silice est de 45 à 75 parties en masse pour 100 parties en masse du composant caoutchouc,
la teneur totale en l'hydroxyde d'aluminium et l'oxyde d'aluminium est de 1 à 40 parties en masse pour 100 parties en masse du composant caoutchouc,
la teneur en la résine aromatique est de 2 à 10 parties en masse pour 100 parties en masse du composant caoutchouc, et
la teneur en le composant plastifiant est de 20 à 40 parties en masse pour 100 parties en masse du composant caoutchouc.

[Formule chimique 1]

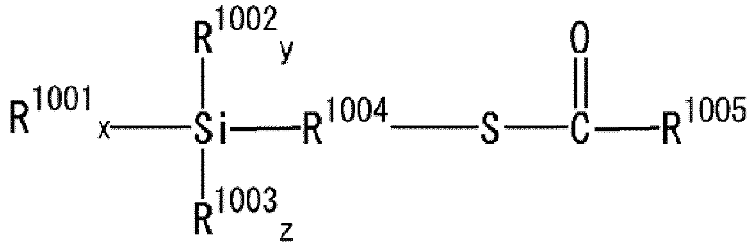

( S1 )

dans laquelle $R^{1001}$ représente un groupe monovalent choisi parmi -Cl, -Br, $-OR^{1006}$, $-O(O=)CR^{1006}$, $-ON=CR^{1006}R^{1007}$, $-NR^{1006}R^{1007}$, et $-(OSiR^{1006}R^{1007})_h(OSiR^{1006}R^{1007}R^{1008})$ ($R^{1006}$, $R^{1007}$ et $R^{1008}$ sont mutuellement identiques ou différents, et représentent chacun un atome d'hydrogène ou un groupe hydrocarboné monovalent en $C_1$ à $C_{18}$, et la moyenne de h vaut de 1 à 4), $R^{1002}$ représente $R^{1001}$, un atome d'hydrogène, ou un groupe hydrocarboné monovalent en $C_1$ à $C_{18}$, $R^{1003}$ représente $R^{1001}$, $R^{1002}$, un atome d'hydrogène, ou un groupe $-[O(R^{1009}O)_j]_{0,5}$ ($R^{1009}$ représente un groupe alkylène en $C_1$ à $C_{18}$ et j représente un entier de 1 à 4), $R^{1004}$ représente un groupe hydrocarboné divalent en $C_1$ à $C_{18}$, $R^{1005}$ représente un groupe hydrocarboné monovalent en $C_1$ à $C_{18}$, et x, y et z sont des valeurs satisfaisant aux relations $x + y + 2z = 3$, $0 \leq x \leq 3$, $0 \leq y \leq 2$, et $0 \leq z \leq 1$.

**2.** Pneu comprenant une bande de roulement produite à partir de la composition de caoutchouc selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015232114 A